# FASCICULE DE BREVET EUROPEEN

(11) **EP 3 237 358 B1**
(45) Date de publication et mention de la délivrance du brevet: **19.09.2018**
(21) Numéro de dépôt: 15823670.3
(22) Date de dépôt: 18.12.2015
(51) Int. Cl.: C04B 35/14, C04B 35/18, C04B 35/185, C04B 35/447, C04B 35/48, C04B 35/56, C04B 35/58, C04B 35/634, C04B 35/80, D03D 15/00, F01D 5/28, B28B 1/24, C04B 35/117, B28B 3/00, B29C 70/02, B29C 70/44, B28B 7/36, B28B 1/26, B28B 23/02

(54) **PROCÉDÉ DE FABRICATION D'UNE PIÈCE RÉFRACTAIRE EN MATÉRIAU COMPOSITE**
VERFAHREN ZUR HERSTELLUNG EINES FEUERFESTEN VERBUNDKÖRPERS
PROCESS FOR MANUFACTURING A REFRACTORY COMPOSITE BODY

(30) Priorité: 23.12.2014 FR 1463281
(43) Date de publication de la demande: 01.11.2017
(73) Titulaire: SAFRAN AIRCRAFT ENGINES, 75015 Paris (FR); SAFRAN, 75015 Paris (FR)
(72) Inventeur: PODGORSKI, Michael, 77550 Moissy-Cramayel Cedex (FR); BILLOTTE CABRE, Catherine, La Prairie J5R 5H8 (CA); DAMBRINE, Bruno, Jacques, Gérard, 77550 Moissy-Cramayel Cedex (FR); MOLLIEX, Ludovic, Edmond, Camille, 91800 Brunoy (FR); RUIZ, Edu, Mont-Royal, QC H3R 1A7 (CA); TURENNE, Sylvain, Saint-Bruno J3V 4W3 (CA)
(74) Mandataire: Desormiere, Pierre-Louis
(86) Numéro de dépôt international: PCT/FR2015/053618
(87) Numéro de publication internationale: WO 2016/102837

(56) Documents cités:
- EP-A1- 2 181 974
- FR-A1- 2 702 475
- FR-A1- 2 958 933
- US-A- 5 436 042
- US-A1- 2012 217 670
- CHIH-YUAN CHANG: "Modeling and evaluation of the filling process of vacuum-assisted compression resin transfer molding", JOURNAL OF POLYMER ENGINEERING, WALTER DE GRUYTER GMBH, DE, vol. 33, no. 3, 1 mai 2013 (2013-05-01), pages 211-219, XP008176406, ISSN: 0334-6447, DOI: 10.1515/POLYENG-2012-0160

## Description

### Arrière-plan de l'invention

La présente invention concerne un procédé de fabrication d'une pièce en matériau composite thermostructural notamment de type oxyde/oxyde ou à matrice céramique (CMC), c'est-à-dire comportant un renfort fibreux formé à partir de fibres en matériau réfractaire densifié par une matrice également en matériau réfractaire.

Les pièces en matériau composite oxyde/oxyde sont généralement élaborées par drapage dans un moule d'une pluralité de strates fibreuses réalisées à partir de fibres en oxyde réfractaire, les strates étant chacune préalablement imprégnées avec une barbotine chargée de particules d'oxyde réfractaire. L'ensemble des strates ainsi disposées est ensuite compacté à l'aide d'un contre-moule ou d'une bâche à vide et un passage en autoclave. La préforme chargée ainsi obtenue est alors soumise à un frittage afin de former une matrice en oxyde réfractaire dans la préforme et obtenir une pièce en matériau composite oxyde/oxyde. Cette technique peut être également utilisée pour réaliser des pièces en matériau composite à matrice céramique (CMC). Dans ce cas, les strates fibreuses sont réalisées à partir de fibres de carbure de silicium (SiC) ou de carbone et sont imprégnées avec une barbotine chargée de particules de carbure (ex. SiC), de borure (ex. TiB2) ou de nitrure (ex. Si3N4).

Cependant, ce type de procédé d'élaboration ne permet de réaliser que des pièces en matériau composite oxyde/oxyde ou CMC ayant une faible épaisseur et un renfort fibreux bidimensionnel (2D). Les caractéristiques mécaniques de ces types de matériau composite restent limitées dans certaines directions. En particulier, ces matériaux ont une faible tenue au délaminage et ne résistent pas bien aux efforts de cisaillement.

La réalisation de textures fibreuses obtenues par tissage tridimensionnel entre des fils continus de chaîne et de trame permet d'augmenter la résistance mécanique du matériau et en particulier sa résistance au délaminage. Dans ce cas et également pour des textures fibreuses 2D de forte épaisseur, seuls les procédés utilisant un gradient de pression, comme les procédés de type infusion, moulage par injection dits « RTM » ou aspiration de poudre submicronique dits « APS », permettent de faire pénétrer une suspension chargée dans la texture fibreuse dont l'épaisseur peut atteindre plusieurs dizaines de millimètres selon les applications visées.

Cependant dans le cadre de la réalisation d'une pièce en matériau oxyde/oxyde ou CMC, ces procédés présentent certains inconvénients.

En effet, l'imprégnation d'une texture fibreuse de géométrie complexe et de forte épaisseur ne pas être réalisée par un procédé de type infusion car il ne permet pas d'atteindre un gradient de pression suffisant pour obtenir une bonne imprégnation de l'ensemble de la texture.

Le procédé de type APS ne permet pas de contrôler finement le taux de matrice introduit dans la préforme.

Si le procédé RTM peut être utilisé pour imprégner une texture fibreuse avec une barbotine chargée, il nécessite néanmoins la mise en oeuvre d'une étape d'élimination (évaporation et évacuation) du solvant de la barbotine afin de ne laisser subsister que les charges solides dans la préforme avant le frittage. Cette étape d'élimination du solvant n'est pas habituellement pas réalisée lors de la mise en oeuvre d'un procédé RTM. Cette étape supplémentaire entraîne un allongement important du temps de traitement de la préforme. Il peut être en outre nécessaire de répéter l'opération d'injection de la barbotine, et, par conséquent, celle d'élimination du solvant.

Par ailleurs, l'évaporation du solvant est délicate car celui-ci doit être retiré de la préforme sans perturber la répartition des particules solides (oxyde réfractaire, carbure, borure, nitrure, etc.) déposées via la barbotine. En effet, lors du séchage de la préforme imprégnée, l'évaporation et l'évacuation du solvant peut emmener avec lui des particules et/ou modifier la répartition de ces dernières dans la préforme et conduire à l'apparition d'importantes porosités dans le matériau final en raison du manque de matrice à certains endroits.

EP 2 181 974 A1 décrit la production de composants en matériau composite à matrice céramique utilisables pour des aubes de turbomachines et divulgue un procédé comprenant les étapes de : façonnement d'une ébauche fibreuse ; placement dans un moule de drainage ; injection d'une solution comprenant des particules de céramiques ; drainage du liquide de ladite solution par capillarité dans ledit moule ; démoulage ; et frittage.

FR 2 702 475 A1 décrit la fabrication de céramiques renforcées par des fibres disposées dans les trois dimensions par : placement d'une ébauche fibreuse tridimensionnelle (e.g. carbonée) dans une cavité de moulage ; placement d'une barbotine comprenant des particules de SiC ou Si₃N₄ et un agent organique ; drainage du milieu liquide de la barbotine par une pièce rigide en matériau poreux placée entre l'ébauche fibreuse et un port d'aspiration ; et frittage.

Aucun de ces documents ne comprend une chambre de compression séparée de la chambre d'imprégnation.

### Objet et résumé de l'invention

La présente invention a pour but de remédier aux inconvénients précités et de proposer une solution qui permet de réaliser des pièces en matériau composite notamment de type oxyde/oxyde ou CMC à partir d'une texture fibreuse épaisse et/ou de géométrie complexe, et ce de manière rapide et fiable tout en permettant un bon contrôle du dépôt et de la répartition des particules solides dans la texture fibreuse afin d'obtenir un matériau avec un taux de macroporosité très faible.

A cet effet, l'invention propose un procédé de fabrication d'une pièce en matériau composite comprenant les étapes suivantes :
- formation d'une texture fibreuse à partir de fibres réfracta ires,
- placement de la texture fibreuse dans un moule comprenant une chambre d'imprégnation comportant dans sa partie inférieure une pièce en matériau poreux sur laquelle repose une première face de ladite texture, la chambre d'imprégnation étant fermée dans sa partie supérieure par une membrane imperméable déformable placée en regard d'une deuxième face de la texture fibreuse, ladite membrane séparant la chambre d'imprégnation d'une chambre de compaction,
- injection d'une barbotine contenant une poudre de particules réfractaires dans la chambre d'imprégnation entre la deuxième face de la texture fibreuse et la membrane,
- injection d'un fluide de compression dans la chambre de compaction, le fluide exerçant une pression sur la membrane pour forcer la barbotine à traverser la texture fibreuse,
- drainage par la pièce en matériau poreux du liquide de la barbotine ayant traversé la texture fibreuse et rétention de la poudre de particules réfractaires à l'intérieur de ladite texture par ladite pièce en matériau poreux de manière à obtenir une préforme fibreuse chargée de particules réfractaires, et
- séchage de la préforme fibreuse,
- démoulage de la préforme fibreuse,
- frittage des particules réfractaires présentes dans la préforme fibreuse afin de former une matrice réfractaire dans ladite préforme.

En utilisant une pièce en matériau poreux permettant de drainer le liquide de la barbotine, le procédé de l'invention permet d'éliminer la phase liquide de la barbotine introduite dans la texture fibreuse sans éliminer les particules solides réfractaires également présentes dans la texture. L'élimination de la phase liquide de la barbotine par drainage permet en outre de ne pas perturber la répartition des particules réfractaires au sein de la texture fibreuse et d'obtenir, par conséquent, une pièce en matériau composite avec un taux volumique de matrice élevé. La pièce en matériau composite thermostructural présente, par conséquent, des propriétés mécaniques améliorées.

Selon un premier aspect particulier du procédé de l'invention, la pièce en matériau poreux est rigide et présente une forme correspondant à la forme de la pièce en matériau composite à réaliser.

Selon un deuxième aspect particulier du procédé de l'invention, la pièce en matériau poreux est déformable et le fond du moule présente une forme correspondant à la forme de la pièce en matériau composite à réaliser, la pièce en matériau poreux s'adaptant à la forme du fond du moule.

Selon un troisième aspect particulier du procédé de l'invention, lors de l'étape de la formation de la texture fibreuse, les fils sont tissés suivant un tissage tridimensionnel.

Selon un quatrième aspect particulier du procédé de l'invention, la texture fibreuse est réalisée par empilement de strates tissées suivant un tissage bidimensionnel, la texture présentant une épaisseur d'au moins 0,5 mm et de préférence d'au moins 1 mm.

Les fils de la préforme peuvent être des fils formés de fibres constituées d'un ou plusieurs des matériaux suivants : l'alumine, la mullite, la silice, un aluminosilicate, un borosilicate, du carbure de silicium et du carbone.

Les particules réfractaires peuvent être en un matériau choisi parmi : l'alumine, la mullite, la silice, un aluminosilicate, un aluminophosphate, la zircone, un carbure, un borure et un nitrure.

Dans un exemple de réalisation, la pièce en matériau composite obtenue peut constituer une aube de turbomachine.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en coupe éclatée d'un outillage conformément à un mode de réalisation de l'invention,
- la figure 2 est une vue schématique en coupe montrant l'outillage de la figure 1 fermé avec une texture fibreuse positionnée dans celui-ci.
- les figures 3 et 4 sont des vues schématiques en coupe montrant les étapes d'imprégnation d'une texture fibreuse avec une barbotine chargée dans l'outillage de la figure 2 conformément à un mode de réalisation du procédé de l'invention.

### Description détaillée de modes de réalisation

Le procédé de fabrication d'une pièce en matériau composite notamment de type oxyde/oxyde ou CMC conforme à la présente invention débute par la réalisation d'une texture fibreuse destinée à former le renfort de la pièce.

La structure fibreuse est réalisée de façon connue par tissage au moyen d'un métier à tisser de type jacquard sur lequel on a disposé un faisceau de fils de chaînes ou torons en une pluralité de couches, les fils de chaînes étant liés par des fils de trame ou inversement. La texture fibreuse peut être réalisée par empilement de strates ou plis obtenu par tissage bidimensionnel (2D). La texture fibreuse peut également être réalisée directement en une seule pièce par tissage tridimensionnel (3D). Par « tissage bidimensionnel », on entend ici un mode de tissage classique par lequel chaque fil de trame passe d'un côté à l'autre de fils d'une seule couche de chaîne ou inversement. Le procédé de l'invention est particulièrement adapté pour permettre l'introduction d'une barbotine chargée dans des textures fibreuses 2D, à savoir des textures obtenues par empilement de strates ou plis 2D, d'épaisseur importante, c'est-à-dire des structures fibreuses 2D ayant une épaisseur d'au moins 0,5 mm, de préférence au moins 1 mm.

Par « tissage tridimensionnel » ou « tissage 3D » ou encore «tissage multicouche », on entend ici un mode de tissage par lequel certains au moins des fils de trame lient des fils de chaîne sur plusieurs couches de fils de chaîne ou inversement suivant un tissage correspondant à une armure de tissage qui peut être notamment choisie parmi une des armures suivantes : interlock, multi-toile, multi-satin et multi-sergé.

Par « armure ou tissu interlock », on entend ici une armure de tissage 3D dont chaque couche de fils de chaîne lie plusieurs couches de fils de trame avec tous les fils de la même colonne de chaîne ayant le même mouvement dans le plan de l'armure.

Par « armure ou tissu multi-toile », on désigne ici un tissage 3D avec plusieurs couches de fils de trame dont l'armure de base de chaque couche est équivalente à une armure de type toile classique mais avec certains points de l'armure qui lient les couches de fils de trame entre elles.

Par « armure ou tissu multi-satin », on désigne ici un tissage 3D avec plusieurs couches de fils de trame dont l'armure de base de chaque couche est équivalente à une armure de type satin classique mais avec certains points de l'armure qui lient les couches de fils de trame entre elles.

Par « armure ou tissu multi-sergé », on désigne ici un tissage 3D avec plusieurs couches de fils de trame dont l'armure de base de chaque couche est équivalente à une armure de type sergé classique mais avec certains points de l'armure qui lient les couches de fils de trame entre elles.

Les textures 3D présentent une géométrie complexe dans laquelle il est difficile d'introduire et de répartir de manière homogène des particules solides en suspension. Le procédé de l'invention est également très bien adapté pour l'introduction d'une barbotine chargée dans des textures fibreuses tissées 3D.

Les fils utilisés pour tisser la texture fibreuse destinée à former le renfort fibreux de la pièce en matériau composite peuvent être notamment formés de fibres constituées d'un des matériaux suivants: l'alumine, la mullite, la silice, un aluminosilicate, un borosilicate, du carbure de silicium, du carbone ou d'un mélange de plusieurs de ces matériaux.

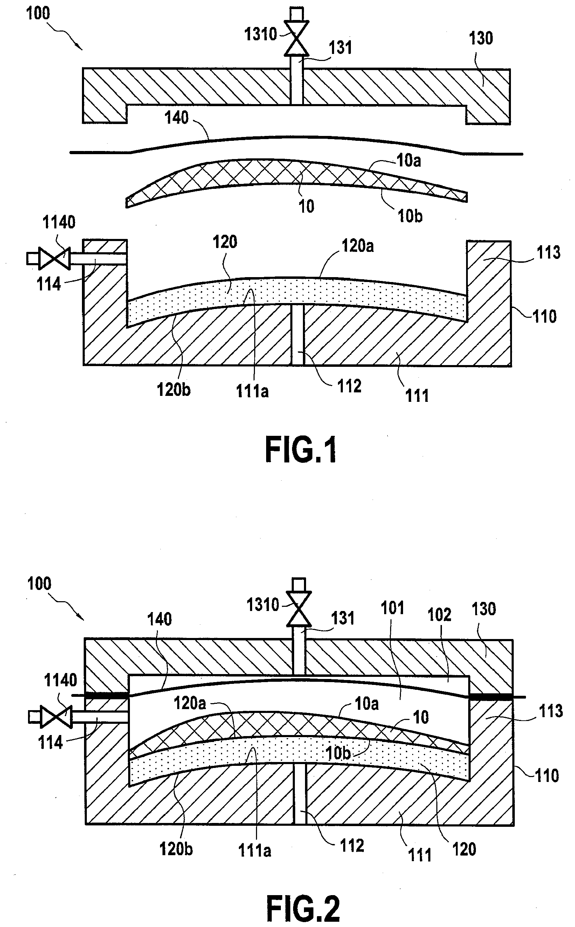

Une fois la texture fibreuse réalisée, celle-ci est placée dans un outillage conforme à l'invention qui permet, comme expliqué ci-après, de déposer des particules réfractaires au sein de la texture fibreuse. A cet effet et comme illustrée sur les figures 1 et 2, une texture fibreuse 10 est placée dans un outillage 100. Dans l'exemple décrit ici, la texture fibreuse 10 est réalisée suivant une des techniques définies ci-avant (empilement strates 2D ou tissage 3D) avec des fils d'alumine Nextel 610™. La texture fibreuse 10 est ici destinée à former le renfort fibreux d'une aube en matériau composite oxyde/oxyde.

L'outillage 100 comprend un moule 110 dont le fond 111 est muni d'un évent 112. Le moule 110 comprend également une paroi latérale 113 comportant un port d'injection 114 équipée d'une vanne 1140. Une pièce en matériau poreux 120 est placée sur la surface interne 111a du fond 111. La pièce en matériau poreux 120 comporte une face inférieure 120b en contact avec la surface interne 111a du fond 111 et une face supérieure 120a destinée à recevoir la texture fibreuse 10. Dans l'exemple décrit ici, la pièce 120 est réalisée avec un matériau déformable tandis que la surface interne 111a du fond 111 du moule 110 présente une forme ou un profil correspondant à la forme de la pièce finale à fabriquer, ici une aube de moteur aéronautique. La pièce 120 étant déformable, elle se conforme au profil de la surface interne 111a du fond 111 et présente sur sa face supérieure 120a une forme similaire à celle de la surface 111a. La pièce 120 peut par exemple être réalisée en polytétrafluoroéthylène (PTFE) microporeux comme les produits « microporous PTFE » vendus par la société Porex®.

Selon une variante de réalisation, la pièce en matériau poreux est rigide et présente sur face supérieure une géométrie correspondant à la forme de la pièce finale à fabriquer. Dans ce cas la pièce peut être notamment réalisée par thermoformage.

A titre d'exemple, la pièce en matériau poreux peut présenter une épaisseur de plusieurs millimètres et un taux moyen de porosités d'environ 30%. La taille moyenne des pores (D50) de la pièce en matériau poreux peut par exemple être comprise entre 1 µm et 2 µm.

L'outillage 100 comprend en outre un couvercle 130 comportant un port d'injection 131 équipé d'une vanne 1310 et une membrane déformable 140 qui, une fois l'outillage fermé (figure 2), sépare une chambre d'imprégnation 101 dans laquelle est présente la texture fibreuse 10 d'une chambre de compaction 102 située au-dessus de la membrane 140. La membrane 140 peut être réalisée par exemple en silicone.

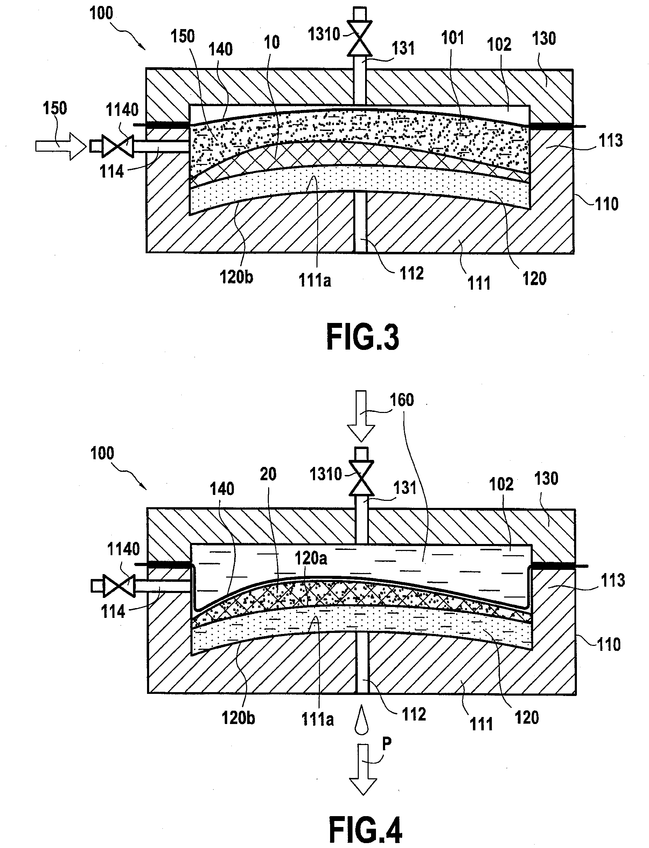

Après placement de la texture 10 sur la face supérieure 120a de la pièce en matériau poreux 120a, on ferme le moule 110 avec le couvercle 130 (figure 2). On injecte alors une barbotine 150 dans la chambre d'imprégnation 101 par le port d'injection 114 dont la vanne 1140 est ouverte (figure 3). La barbotine 150 est, dans cet exemple, destinée à permettre la formation d'une matrice d'oxyde réfractaire dans la texture. La barbotine 150 correspond à une suspension contenant une poudre de particules d'oxyde réfractaire, les particules présentant une dimension particulaire moyenne comprise entre 0,1 µm et 10 µm. La phase liquide de la barbotine peut être notamment constituée par de l'eau (pH acide), de l'éthanol ou tout autre liquide dans lequel il est possible de mettre la poudre désirée en suspension. Un liant organique peut être aussi ajouté (PVA par exemple, soluble dans l'eau). Ce liant permet d'assurer la tenue du cru après séchage et avant frittage.

La barbotine 150 peut par exemple correspondre à une suspension aqueuse constituée de poudre d'alumine dont la dimension particulaire moyenne (D50) est comprise entre 0,1 µm et 0,3 µm et dont la fraction volumique est comprise entre 27% et 42%, la suspension étant acidifiée par de l'acide nitrique (pH compris entre 1,5 et 4). En outre de l'alumine, les particules d'oxyde réfractaire peuvent être également en un matériau choisi parmi la mullite, la silice, un aluminosilicate, un aluminophosphate et la zircone. En fonction de leur composition de base, les particules d'oxyde réfractaire peuvent être en outre mélangées avec des particules d'alumine, de zircone, d'aluminosilicate, d'oxydes de Terre rare, de dissilicates de Terre rare (utilisés par exemple dans les barrières environnementales ou thermiques) ou toute autre charge permettant de rajouter des fonctions spécifiques au matériau final (noir de carbone, graphite, carbure de silicium, etc.).

La quantité de barbotine 150 injectée dans la chambre d'imprégnation 101 est déterminée en fonction du volume de la texture fibreuse 10 à imprégner. C'est la quantité de poudre initialement introduite qui pilotera l'épaisseur de calage et donc le taux volumique de fibres (Tvf) et de matrice (Tvm).

Une fois la barbotine injectée dans la chambre d'imprégnation 101, on procède à l'opération de compaction en injectant un fluide de compression 160, par exemple de l'huile, dans la chambre de compaction 102 par le port d'injection 131 dont la vanne 1310 est ouverte, la vanne 1140 du port d'injection 114 ayant été préalablement fermée. Le fluide de compression 160 applique une pression sur la barbotine 150 au travers de la membrane 140 qui force la barbotine 150 à pénétrer dans la texture fibreuse 10. Le fluide 160 impose une pression hydrostatique sur l'intégralité de la membrane 160 et, par conséquent, sur l'intégralité de la barbotine présente au-dessus de la texture 10. La pression appliquée par la membrane 140 sur la barbotine et sur la texture fibreuse est de préférence inférieure à 15 bars, par exemple 7 bars, de manière à faire pénétrer la barbotine dans la texture et compacter suffisamment la texture pour permettre à la phase liquide de la barbotine d'être drainée par la pièce en matériau poreux sans dégrader la préforme résultante.

La pièce en matériau poreux 120 qui est située du côté de la face 10b de la texture fibreuse opposée à la face 10a à partir de laquelle la barbotine pénètre dans la texture remplit plusieurs fonctions. En effet, la pièce 120 permet le drainage du liquide de la barbotine à l'extérieur de la texture fibreuse, le liquide ainsi drainé étant évacué ici par l'évent 112. Le drainage est réalisé à la fois pendant et après l'opération de compaction. Lorsqu'il n'y a plus de liquide s'écoulant par l'évent 112, le drainage est terminé. En combinaison avec l'application d'une pression sur la barbotine par le fluide de compression, un pompage P, par exemple au moyen d'une pompe à vide primaire (non représentée sur les figures 1 à 4), peut être réalisé au niveau de l'évent 112. Ce pompage est optionnel. Un chauffage peut suffire. Toutefois la combinaison des deux permet d'accélérer le séchage.

En outre, l'outillage peut être muni de moyens de chauffage, comme des éléments résistifs intégrés aux parois de l'outillage, afin d'augmenter la température dans la chambre de compaction et faciliter l'évacuation du liquide de la barbotine par évaporation. La température dans la chambre de compaction peut être élevée à une température comprise entre 80°C et 105°C.

La pièce en matériau poreux 120 permet également de retenir les particules solides d'oxyde réfractaire présentes dans la barbotine, les particules d'oxyde réfractaire se déposant ainsi progressivement par sédimentation dans la texture fibreuse. Cela permet d'obtenir ultérieurement (i.e. après frittage) la matrice.

La pièce 120 permet également de maintenir la texture fibreuse en forme pendant l'opération de compaction car elle reprend sur sa face supérieure 120a la forme du fond 111 du moule 110 correspondant à la forme de la pièce finale à fabriquer.

On obtient alors une préforme fibreuse 20 chargée de particules d'oxyde réfractaire, ici des particules d'alumine du type décrit précédemment. La préforme est ensuite démoulée par vidange du fluide de compression de la chambre de compaction 102, la préforme conservant après démoulage sa géométrie de compaction.

La préforme est ensuite extraite de l'outillage et soumise à un traitement thermique de frittage sous air à une température comprise entre 1000°C et 1200°C afin de fritter les particules d'oxyde réfractaire ensemble et former ainsi une matrice en oxyde réfractaire dans la préforme. On obtient alors une pièce en matériau composite oxyde/oxyde munie d'un renfort fibreux obtenu par tissage 3D qui présente un taux volumique de matrice élevé avec une répartition homogène de la matrice dans tout le renfort fibreux.

Une pièce en matériau composite CMC peut être obtenue de la même façon en réalisant la texture fibreuse avec des fibres de carbure de silicium ou de carbone et en utilisant une barbotine chargée de particules de carbure (ex. SiC), de borure (ex. TiB2) ou de nitrure (ex. Si3N4).

## Revendications

1. Procédé de fabrication d'une pièce en matériau composite comprenant les étapes suivantes :
- formation d'une texture fibreuse (10) à partir de fibres réfractaires,
- placement de la texture fibreuse (10) dans un moule (110) comprenant une chambre d'imprégnation (101) comportant dans sa partie inférieure une pièce en matériau poreux (120) sur laquelle repose une première face (10b) de ladite texture (10), la chambre d'imprégnation (101) étant fermée dans sa partie supérieure par une membrane imperméable déformable (140) placée en regard d'une deuxième face (10a) de la texture fibreuse (10), ladite membrane (140) séparant la chambre d'imprégnation (101) d'une chambre de compaction (102),
- injection d'une barbotine (150) contenant une poudre de particules réfractaires dans la chambre d'imprégnation entre la deuxième face (10a) de la texture fibreuse (10) et la membrane (140),
- injection d'un fluide de compression (160) dans la chambre de compaction (102), le fluide exerçant une pression sur la membrane (140) pour forcer la barbotine (150) à traverser la texture fibreuse (10),
- drainage par la pièce en matériau poreux (120) du liquide de la barbotine ayant traversé la texture fibreuse (10) et rétention de la poudre de particules réfractaires à l'intérieur de ladite texture par ladite pièce en matériau poreux (120) de manière à obtenir une préforme fibreuse (20) chargée de particules réfractaires,
- séchage de la préforme fibreuse (20),
- démoulage de la préforme fibreuse (20), et
- frittage des particules réfractaires présentes dans la préforme fibreuse afin de former une matrice réfractaire dans ladite préforme.

2. Procédé selon la revendication 1, **caractérisé en ce que** la pièce en matériau poreux est rigide et présente une forme correspondant à la forme de la pièce en matériau composite à réaliser.

3. Procédé selon la revendication 1, **caractérisé en ce que** la pièce en matériaux poreux (120) est déformable et le fond (111) du moule (110) présente une forme correspondant à la forme de la pièce en matériau composite à réaliser, la pièce en matériau poreux (120) s'adaptant à la forme du fond (111) du moule (110).

4. Procédé selon l'une quelconque des revendications 1 à 3, **caractérisé en ce que**, lors de l'étape de la formation de la texture fibreuse, les fils sont tissés suivant un tissage tridimensionnel.

5. Procédé selon l'une quelconque des revendications 1 à 3, **caractérisé en ce que** la texture fibreuse est réalisée par empilement de strates tissées suivant un tissage bidimensionnel, la texture présentant une épaisseur d'au moins 0,5 mm.

6. Procédé selon l'une quelconque des revendications 1 à 5, **caractérisée en ce que** les fils de la préforme sont formés de fibres constituées d'un ou plusieurs des matériaux suivants : l'alumine, la mullite, la silice, un aluminosilicate, un borosilicate, du carbure de silicium et du carbone.

7. Procédé selon la revendication 5 ou 6, **caractérisé en ce que** les particules réfractaires sont en un matériau choisi parmi : l'alumine, la mullite, la silice, un aluminosilicate, un aluminophosphate, la zircone, un carbure, un borure et un nitrure.

## Patentansprüche

1. Verfahren zur Herstellung eines Teils aus Verbundwerkstoff, umfassend die folgenden Schritte:
- Ausbilden einer Faserstruktur (10) aus feuerfesten Fasern,
- Anordnen der Faserstruktur (10) in einer Form (110) mit einer Imprägnierungskammer (101), welche in ihrem unteren Teil ein Teil aus porösem Material (120) aufweist, auf dem eine erste Seite (10b) der Struktur (10) aufliegt, wobei die Imprägnierungskammer (101) in ihrem oberen Teil durch eine verformbare undurchlässige Membran (140), die gegenüber einer zweiten Seite (10a) der Faserstruktur (10) angeordnet ist, verschlossen ist, wobei die Membran (140) die Imprägnierungskammer (101) von einer Verdichtungskammer (102) trennt,
- Einspritzen eines Schlickers (150), der ein Pulver aus feuerfesten Teilchen enthält, in die Imprägnierungskammer zwischen der zweiten Seite (10a) der Faserstruktur (10) und der Membran (140),
- Einspritzen eines Druckfluids (160) in die Verdichtungskammer (102), wobei das Fluid einen Druck auf die Membran (140) ausübt, um den Schlicker (150) zum Durchlaufen der Faserstruktur (10) zu zwingen,
- Drainieren der Flüssigkeit des Schlickers, welcher die Faserstruktur (10) durchlaufen hat, über das Teil aus porösem Material (120), und Zurückhalten des Pulvers aus feuerfesten Teilchen innerhalb der Struktur über das Teil aus porösem Material (120), um einen mit feuerfesten Teilchen beladenen Faservorformling (20) zu erhalten,
- Trocknen des Faservorfomlings (20),
- Ausformen des Faservorformlings (20), und
- Sintern der feuerfesten Teilchen, die in dem Faservorformling vorhanden sind, um eine feuerfeste Matrix in dem Vorformling zu bilden.

2. Verfahren nach Anspruch 1, **dadurch gekennzeichnet, dass** das Teil aus porösem Material starr ist und eine Form aufweist, die der Form des herzustellenden Verbundwerkstoffteils entspricht.

3. Verfahren nach Anspruch 1, **dadurch gekennzeichnet, dass** das Teil aus porösem Material (120) verformbar ist und der Boden (111) der Form (110) eine Form aufweist, die der Form des herzustellenden Verbundwerkstoffteils entspricht, wobei das Teil aus porösem Material (120) sich der Form des Bodens (111) der Form (110) anpasst.

4. Verfahren nach einem der Ansprüche 1 bis 3, **dadurch gekennzeichnet, dass** die Fäden während des Schrittes des Ausbildens der Faserstruktur in einer dreidimensionalen Webart gewebt werden.

5. Verfahren nach einem der Ansprüche 1 bis 3, **dadurch gekennzeichnet, dass** die Faserstruktur durch Stapeln von in einer zweidimensionalen Webart gewebten Schichten hergestellt wird, wobei die Struktur eine Dicke von wenigstens 0,5 mm aufweist.

6. Verfahren nach einem der Ansprüche 1 bis 5, **dadurch gekennzeichnet, dass** die Fäden des Vorformlings von Fasern gebildet sind, die aus einem oder mehreren der folgenden Materialien bestehen: Aluminiumoxid, Mullit, Siliciumdioxid, Aluminosilikat, Borosilikat, Siliciumcarbid und Kohlenstoff.

7. Verfahren nach Anspruch 5 oder 6, **dadurch gekennzeichnet, dass** die feuerfesten Teilchen aus einem Material bestehen, das ausgewählt ist aus:
Aluminiumoxid, Mullit, Siliciumdioxid, einem Aluminosilikat, einem Aluminiumphosphat, Zirkonoxid, einem Carbid, einem Borid und einem Nitrid.

## Claims

1. A method of fabricating a part out of composite material, the method comprising the following steps:
• forming a fiber texture (10) from refractory fibers;
• placing the fiber texture (10) in a mold (110) having an impregnation chamber (101) including in its bottom portion a part made of porous material (120) on which a first face (10b) of said texture (10) rests, the impregnation chamber (101) being closed in its top portion by a deformable impermeable diaphragm (140) placed facing a second face (10a) of the fiber texture (10), said diaphragm (140) separating the impregnation chamber (101) from a compacting chamber (102);
• injecting a slip (150) containing a powder of refractory particles into the impregnation chamber between the second face (10a) of the fiber texture (10) and the diaphragm (140);
• injecting a compression fluid (160) into the compacting chamber (102), the fluid exerting pressure on the diaphragm (140) to force the slip (150) to pass through the fiber texture (10);
• draining, via the porous material part (120), the liquid of the slip that has passed through the fiber texture (10) while retaining the powder of refractory particles inside said texture by means of said part of porous material (120) so as to obtain a fiber preform (20) filled with refractory particles;
• drying the fiber preform (20);
• unmolding the fiber preform (20); and
• sintering the refractory particles present in the fiber preform in order to form a refractory matrix in said preform.

2. A method according to claim 1, **characterized in that** the porous material part is rigid and presents a shape matching the shape of the composite material part that is to be made.

3. A method according to claim 1, **characterized in that** the porous material part (120) is deformable, and the bottom (111) of the mold (110) presents a shape corresponding to the shape of the composite material part that is to be made, the porous material part (120) taking on the shape of the bottom (111) of the mold (110).

4. A method according to any one of claims 1 to 3, **characterized in that**, during the step of forming the fiber texture, the yarns are woven with a three-dimensional weave.

5. A method according to any one of claims 1 to 3, **characterized in that** the fiber texture is made by stacking plies woven using a two-dimensional weave, the texture presenting a thickness of at least 0.5 mm.

6. A method according to any one of claims 1 to 5, **characterized in that** the yarns of the preform are formed by fibers made up of one or more of the following materials: alumina, mullite, silica, an aluminosilicate, a borosilicate, silicon carbide, and carbon.

7. A method according to claim 5 or claim 6, **characterized in that** the refractory particles are made of a material selected from: alumina, mullite, silica, an aluminosilicate, an aluminophosphate, zirconia, a carbide, a boride, and a nitride.
